# EUROPEAN PATENT SPECIFICATION

(11) **EP 3 511 898 B1**
(45) Date of publication and mention of the grant of the patent: **19.08.2020**
(21) Application number: 18151371.4
(22) Date of filing: 12.01.2018
(51) Int. Cl.: G06T 3/00

(54) **A METHOD AND A SYSTEM FOR DISPLAYING A REALITY VIEW**
EIN VERFAHREN UND EIN SYSTEM ZUR DARSTELLUNG EINER REALITÄTSSICHT
UN PROCÉDÉ ET UN SYSTÈME POUR L'AFFICHAGE D'UNE VUE EN RÉALITÉ

(43) Date of publication of application: 17.07.2019
(73) Proprietor: Canon Production Printing Holding B.V., 5914 CA Venlo (NL)
(72) Inventor: Hermus, Bastiaan J., 5914 CA Venlo (NL); Hekkens, Ruben T.H., 5914 CA Venlo (NL); Jansen, Jacoba A.H., 5914 CA Venlo (NL)
(74) Representative: Canon Production Printing IP Department

(56) References cited:
- US-A1- 2013 321 390
- US-A1- 2014 002 490
- US-A1- 2015 206 329
- US-A1- 2017 092 007

## Description

### FIELD OF THE INVENTION

The invention relates to a computer-implemented method for displaying a reality view on a display system, the method comprising the steps of establishing a user view area for the augmented reality view comprising a target object, and determining a first sub-area within the user view area, the first sub-area comprising the target object.

The present disclosure relates to augmented reality imaging and visualization systems and more particularly to informing users of objects in the user view area.

### BACKGROUND OF THE INVENTION

Modern computing and displaying technologies have facilitated the development of systems for so called "virtual reality", "augmented reality", or "mixed reality" experiences, wherein digitally reproduced images or portions thereof are presented to a user in a manner wherein they seem to be, or may be perceived as, real.

The display systems for showing virtual, augmented or mixed reality may comprise computer processing power or may be connected to computer processing power to perform image processing calculations, image processing transformations, etc.

A virtual reality, or "VR", scenario typically involves presentation of digital or virtual image information without transparency to other actual real-world visual input; an augmented reality, or "AR", scenario typically involves presentation of digital or virtual image information as an augmentation to visualization of the actual world around the user; a mixed reality, or "MR", related to merging real and virtual worlds to produce new environments where physical and virtual objects co-exist and interact in real time. As it turns out, the human visual perception system is very complex, and producing VR, AR or MR technology that facilitates a comfortable, natural-feeling, rich presentation of virtual image elements amongst other virtual or real-world imagery elements is challenging. A display method and a display system herein address one of the challenges related to AR and MR technology. For example, US Patent application 2017/092007 A1 describes a method for displaying a reality view on a display system. First, a user view is established for a target object, such that the target object occupies a sub-area of the display. Then, pixel data information is determined for the target object.

In particular, in environments that are already visually crowded, adding digital or virtual objects to the user view area, may not really help the user to focus on the target object.

### SUMMARY OF THE INVENTION

It is an object of the present invention to improve the displaying of the reality view in order to focus on the target object.

According to the present invention, this object is achieved by the computer-implemented method presented here-above, the method comprises the further steps of determining a second sub-area within the user view area, the second sub-area being non-overlapping with the first sub-area, determining pixel data information corresponding to the first sub-area, determining pixel data information corresponding to the second sub-area, reducing the pixel data information corresponding to the second sub-area, combining the determined pixel data information corresponding to the first sub-area with the reduced pixel data information corresponding to the second sub-area into partially reduced pixel data information for the user view area, and displaying the user view area of the reality view on the display system according to the partially reduced pixel data information corresponding to the second sub-area.

By reducing the pixel data information corresponding to the second sub-area, it becomes easier for the user to put focus at the first sub-area which comprises the target object.

According to an embodiment the display system is a wearable display device, for example an optical head mounted device. Smart glasses like a Microsoft HoloLens product is an example of an optical head mounted device.

According to an embodiment the method comprises the steps of receiving a specification of the target object at the display system, and the display system identifying the target object in the user view area by means of the received specification of the target object.

According to an embodiment the step of reducing the pixel data information corresponding to the second sub-area comprises at least one of the steps of removing digital objects and /or digital details of digital objects from the pixel data information corresponding to the second sub-area, significantly reducing a contrast in the second sub-area, blurring the second sub-area, significantly reducing a number of colours in the second sub-area, reducing the colours in the second sub-area to grey-scale colours, and at least partially blocking the second sub-area.

According to an embodiment the method comprises the step of augmenting the user view area with additional virtual objects.

According to an embodiment the additional virtual objects provide information about the target object.

According to an embodiment the additional virtual objects are at least partially located in the first sub-area.

According to an embodiment the target object is a printer in a printer fleet or a functional module of a printer.

According to an embodiment the second sub-area surrounds the first sub-area.

According to an embodiment the first sub-area and the second sub-area together equal the user view area.

The present invention also relates to a display system comprising a camera for receiving a reality view, a display for displaying the received reality view to a user in a user view area and a controller for augmenting pixel data information of the user view area, wherein the controller is configured to execute the steps of the method according to the invention.

The present invention also relates to a software product comprising program code on a non-transitory computer-readable medium, wherein said program code, when loaded into a computer causes the computer to execute the steps of the method according to the invention.

### BRIEF DESCRIPTION OF THE DRAWINGS

FIG. 1 depicts an illustration of a user view area comprising a reality view with certain physical objects viewable by a person.
FIG. 2 depicts an illustration of the user view area in FIG. 1 with a first sub-area and a second sub-area according to the invention.
FIG. 3 depicts an illustration of the user view area in FIG. 1 with a second sub-area with reduced pixel data information according to the invention.
FIG. 4 depicts an illustration of the user view area in FIG. 3 with information data added to the first sub-area according to the invention.
FIG. 5 schematically illustrates an example of a wearable display system according to the invention.
FIG. 6 is a process flow diagram of an example of a method according to the invention.

### DETAILED DESCRIPTION OF THE EMBODIMENTS

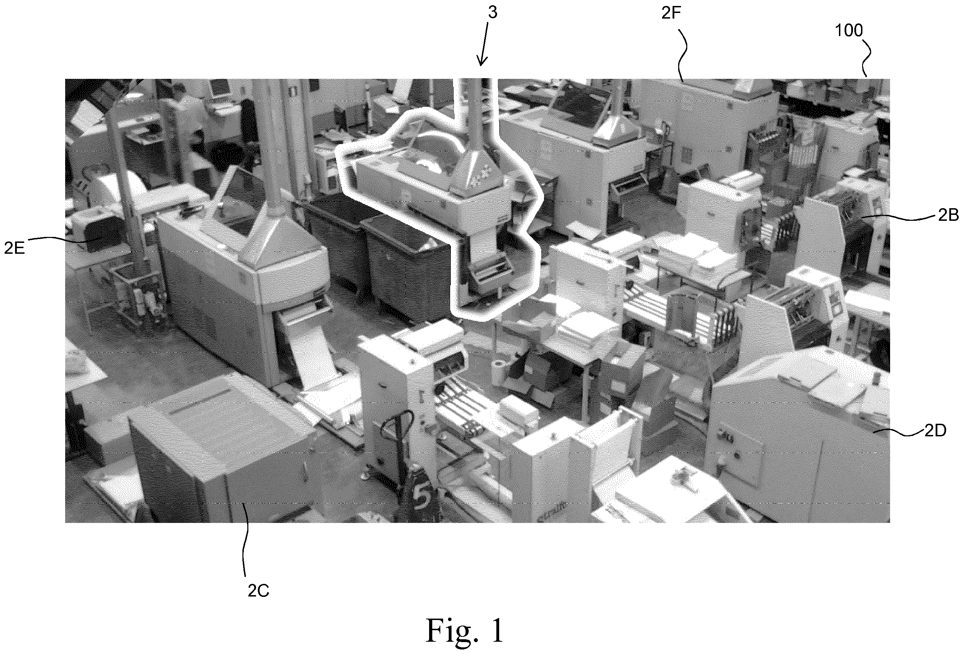

FIG. 1 depicts an illustration of a user view area comprising a reality view 100 with certain physical objects viewable by a person. The reality view 100 shows a machine hall with a number of machines 2B, 2C, 2D, 2E, 2F and a target object, machine 3. The reality view 100 is augmented with a white contour which encircles the target object 3. The target object 3 may be a printer in a printer fleet or printer swarm. The user view area may also comprise a single printer and the target object is a functional module of the printer. The target object 3 may also be modelled in a computer-aided design (CAD) model and the CAD model may be superimposed on the appropriate position in user view area 100.

The user view area may also be a dash cam view showing a road or highway, wherein the advertisement boards are near the road or highway. The invention may then be used to determine the road to be the target object and the second sub-area may be defined to include the advertisement boards in the user view area.

The user view area may also be a railway station with multiple platforms where trains are leaving or arriving. The target object may be the train you want to catch. The other trains may be part of the second sub-area.

The user view area may also be an operating room in a hospital where a surgeon is operating on a human body. The target object may be a tumor which has to be removed from the human body. Other parts of the body which are irrelevant for the operation may be part of the second sub-area.

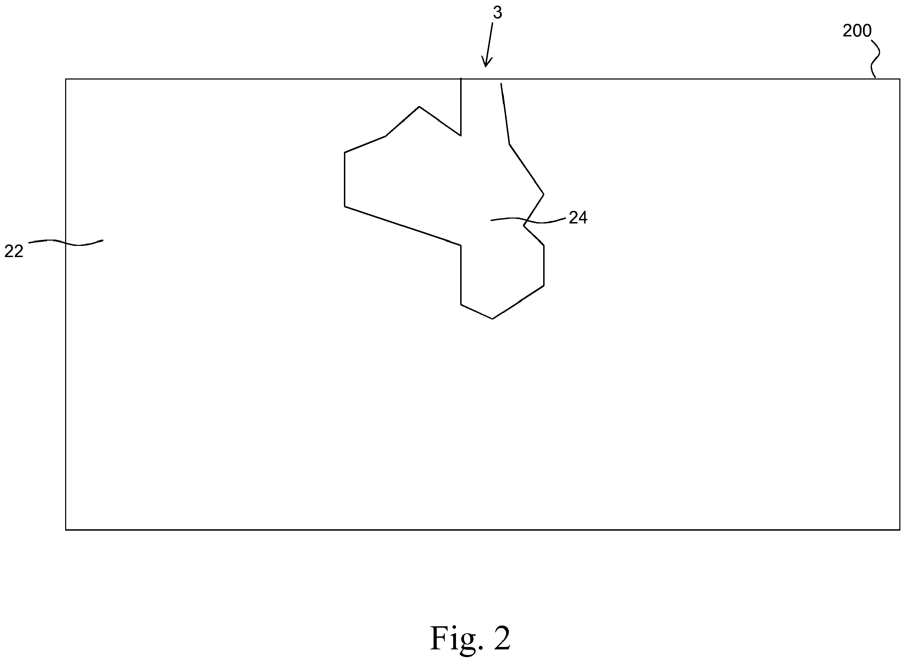

FIG. 2 depicts the user view area 100 from FIG. 1 as a schematic user view area 200 with a first sub-area 24 and a second sub-area 22 according to the invention. The first sub-area 24 comprises the target object 3 from FIG. 1 and is bounded by means of the white contour from FIG. 1. The second sub-area 22 is the area outside the first sub-area 24 within the schematic user view area 200. The first sub-area 24 and the second sub-area 22 form together the whole schematic user view area 200.

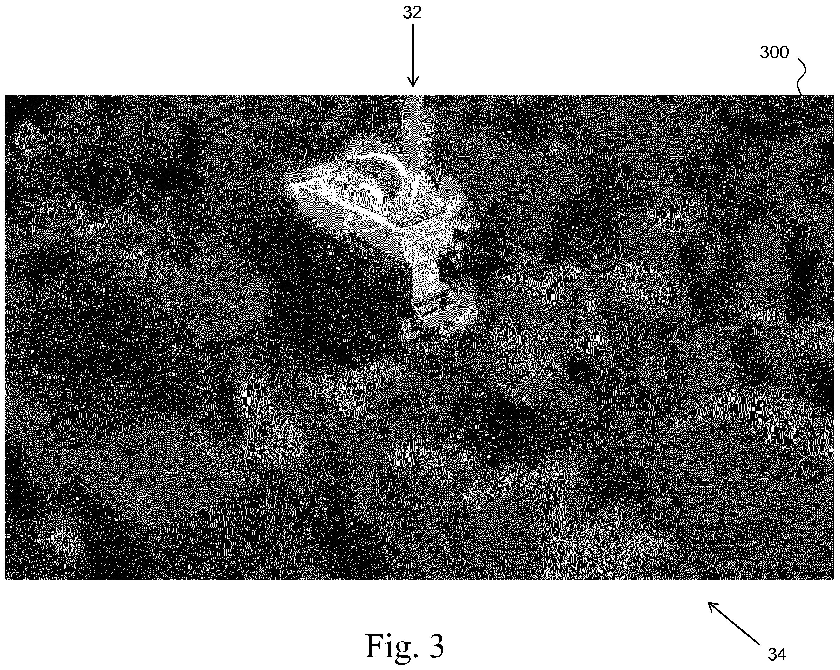

FIG. 3 depicts an illustration 300 of the user view area 100 in FIG. 1 with the second sub-area 22 from FIG. 2 with reduced pixel data information according to the invention. The second sub-area 22 is now an area 34 with a reduced contrast. The first sub-area 32 is now outstanding with respect to the second sub-area 22 alias area 34. The first sub-area 32 comprises the target object 3 which is being focussed upon. The second sub-area 34 is now shown with a significantly reduced contrast. However, other ways of reducing the pixel information may be introduced such as removing digital objects and /or digital details of digital objects from the pixel data information corresponding to the second sub-area 34, blurring the second sub-area 34, significantly reducing a number of colours in the second sub-area 34, reducing the colours in the second sub-area 34 to grey-scale colours, or at least partially blocking the second sub-area 34, for example covering the second sub-area 34 with a black digital pixel surface.

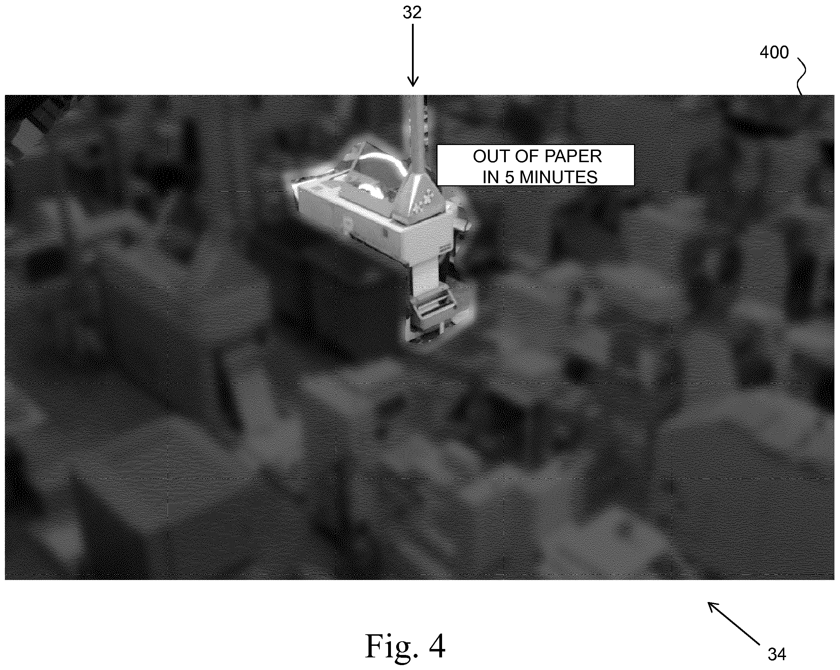

FIG. 4 depicts an illustration 400 of the user view area in FIG. 3 with information data added to the first sub-area 32 according to the invention. The user view area 400 is augmented with an additional virtual object. The additional virtual object provides information about the target object. The target object may be a printing system and the additional virtual object may provide a message to the user that the printing system will run out of paper within 5 minutes. The additional virtual object is at least partially located in the first sub-area 32. Since the user is focussed on the target object, the additional virtual object positioned near the target object in the user view area 400 will be noticed quickly by the user.
In this case the additional virtual object comprises a status message for the user. However, other messages like instructions for handling the target object may be provided.

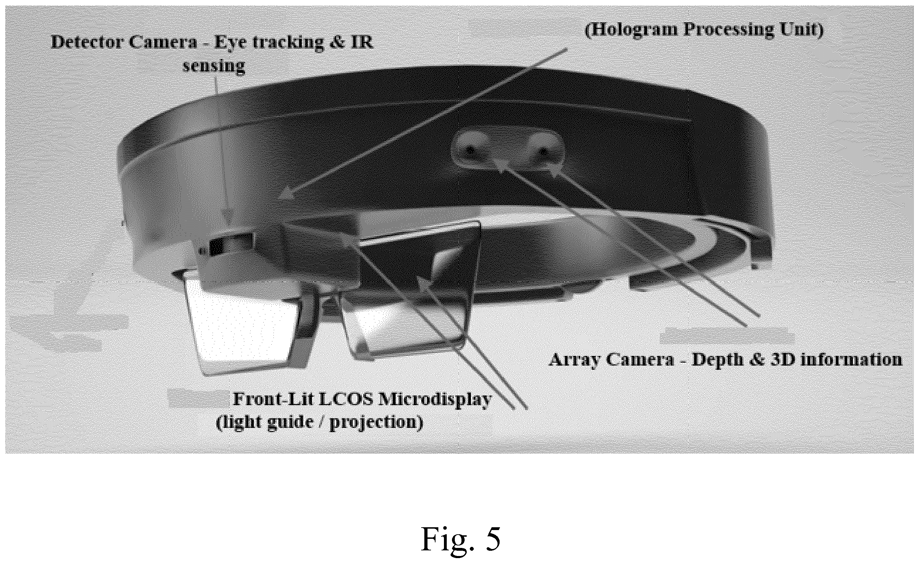

FIG. 5 schematically illustrates an example of a wearable display system which may be used to program a controller of the wearable display system to execute the method according to the invention. The wearable system comprises a detector camera for eye tracking and infrared sensing, a hologram processing unit, a front-lit LCOS micro-display for displaying the user view area and an array camera for depth and 3D information. The wearable system can be worn on the head of the user. The wearable system may be a Microsoft HoloLens.

The wearable display system submits a live image of the real world which image is augmented with computer generated output like sound, video, images or gps-data. This augmentation is continuously updated such that movement of the head of the user are reflected. The wearable display system comprises a processor, a display, an input apparatus and sensors. Sensors and input apparatuses are for example cameras, global positioning system, gyroscope, accelerometer, compass, proximity detection sensors, voice recognition, eye tracking system, etc.

Augmented reality technology is suitable for displaying data in situ on top of the real world, wherein also insight in the structure of the environment is needed, such that images may be generated on the right place and in the right context.

Predefined images or markers such as QR codes may be used as visual hints. Recently developed depth-sensing cameras build up a detailed 3D model of the world surrounding the camera. This 3D model is used to assure that virtual objects seem to obey to physical laws.

According to an embodiment the wearable system comprises a specification of the target object or is connected to a computer storage which comprises a specification of the target object. The wearable system comprises an image recognition system or is connected to a computer system comprising an image recognition system. The image recognition system is able to identify the target object in the user view area by means of the specification of the target object received from the computer storage. When the target has been identified in the user view area, the boundary of the first sub-area and the boundary of the second sub-area may be determined. In case of a moving target object, the boundaries of the first sub-area and the second sub-area are re-determined at appropriate time intervals by the image recognition system. In this way, the first sub-area and the second sub-area are regularly adapted to a track of the moving target object. Also the user wearing the wearable display system or a camera of the display system or the display system itself may move with respect to the target object, leading to automatically re-determining the first sub-area and the second sub-area in the user view area.

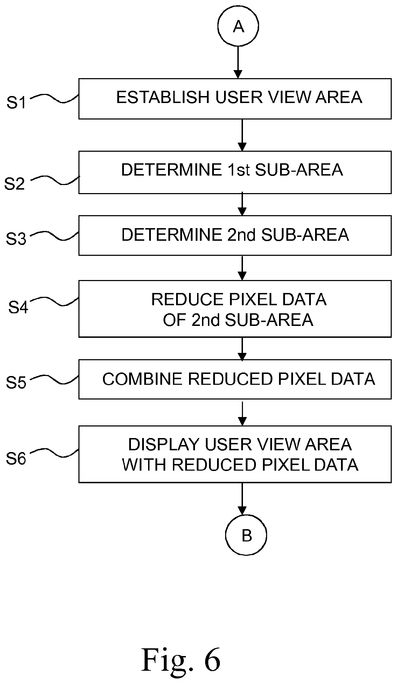

FIG. 6 is a process flow diagram of an example of a method according to the invention. The computer-implemented method is suitable for displaying a reality view on a display system.

The method starts in a starting point A. The starting point A leads to a first step S1.

In the first step S1 a user view area is established for the reality view comprising the target object. The size of the user view area is usually determined by the display system that is used to view the real world. The direction into which the display system is directed determines the user view area in the real surrounding world.

In a second step S2 a first sub-area is determined within the user view area. The first sub-area comprises the target object. The second step S2 may comprise sub-steps of recognizing and identifying the target object in the user view area. Pixel data information corresponding to the first sub-area is determined. Pixel data information comprises an XY position of the pixel in the 2D user view area and colour information of the pixel.

In a third step S3 a second sub-area is determined within the user view area. The second sub-area is non-overlapping with the first sub-area. Pixel data information corresponding to the second sub-area is determined. Pixel data information comprises an XY position of the pixel in the 2D user view area and colour information of the pixel. According to an embodiment the first sub-area and the second sub-area together form the complete user view. The second sub-area may be determined to be the counterpart of the first sub-area in the user view area.

In a fourth step S4 the pixel data information corresponding to the second sub-area is reduced. An image processing unit may be used to establish the reduction of the pixel data information of the second sub-area. The image processing unit may be part of the display system, or the display system may be connected wired or wireless to a computer system comprising the image processing unit.

In a fifth step S5 the determined pixel data information corresponding to the first sub-area is combined with the reduced pixel data information corresponding to the second sub-area into partially reduced pixel data information for the user view area. The result of the partially reduced pixel data information for the user view area if for example the illustration 300 in FIG. 3.

In a sixth step S6 the user view area of the reality view is displayed on the display system according to the partially reduced pixel data information for the user view area. The target object in the first sub-area seems to be highlighted, standing out, and emphasized with respect to its environment, i.e. the second sub-area.

The method ends in an end point B.

It may be clear to the skilled person that the various embodiments of the method may be combined in one way or another in order to establish an appropriate and applicable embodiment of the method according to the invention.
FIG. 1 comprises a user view area 100 of a machine hall with printers. However, other objects like other production machines or moving objects like air planes, trains, cars, human beings, animals, may be envisioned as target objects.
FIG. 5 shows a HoloLens as a wearable display system. However, other display systems combined with computer processing power may be envisioned, like laptops, tablets, mobile phones, smart phones, smart glasses, etc.

## Claims

1. A computer-implemented method for displaying a reality view on a display system, the method comprising the steps of
a) establishing (S1) a user view area (100) for the reality view comprising a target object (3),
b) determining (S2) a first sub-area (24) within the user view area (100), the first sub-area (24) comprising the target object (3),
wherein the method further comprises the steps of
c) determining (S3) a second sub-area (22) within the user view area (100), the second sub-area (22) being non-overlapping with the first sub-area (24),
d) determining pixel data information corresponding to the first sub-area (24),
e) determining pixel data information corresponding to the second sub-area (22),
f) reducing (S4) the pixel data information corresponding to the second sub-area (22),
g) combining (S5) the determined pixel data information corresponding to the first sub-area (24) with the reduced pixel data information corresponding to the second sub-area (22) into partially reduced pixel data information for the user view area (300), and
h) displaying (S6) the user view area (300) of the reality view on the display system according to the partially reduced pixel data information for the user view area.

2. A method according to claim 1, wherein the display system is a wearable display device, for example an optical head mounted device.

3. A method according to any of the preceding claims, wherein the method comprises the steps of receiving a specification of the target object at the display system, and the display system identifying the target object in the user view area by means of the received specification of the target object.

4. A method according to any of the preceding claims, wherein the step of reducing the pixel data information corresponding to the second sub-area comprises at least one of the steps of removing digital objects and /or digital details of digital objects from the pixel data information corresponding to the second sub-area, significantly reducing a contrast in the second sub-area, blurring the second sub-area, significantly reducing a number of colours in the second sub-area, reducing the colours in the second sub-area to grey-scale colours, and at least partially blocking the second sub-area.

5. A method according to any of the preceding claims, wherein the method comprises the step of augmenting the user view area (400) with additional virtual objects.

6. A method according to claim 5, wherein the additional virtual objects provide information about the target object.

7. A method according to claim 5 or 6, wherein the additional virtual objects are at least partially located in the first sub-area.

8. A method according to any of the preceding claims, wherein the target object is a printer (3) in a printer fleet or a functional module of a printer.

9. A method according to any of the preceding claims, wherein the second sub-area surrounds the first sub-area.

10. A method according to any of the preceding claims, wherein the first sub-area and the second sub-area together equal the user view area.

11. A display system comprising a camera for receiving a reality view, a display for displaying the received reality view to a user in a user view area (100) and a controller for partially reducing pixel data information of the user view area (300), wherein the controller is configured to execute the steps of the method according to any of the claims 1 - 10.

12. A software product comprising program code on a non-transitory computer-readable medium, wherein said program code, when loaded into a computer causes the computer to execute the steps of the method according to any of the claims 1 - 10.

## Patentansprüche

1. Computerimplementiertes Verfahren zur Wiedergabe einer Realitätsansicht auf einem Displaysystem, welches Verfahren die folgenden Schritte umfasst:
a) erstellen (S1) eines Benutzeransichtsbereiches (100) für die Realitätsansicht, der ein Zielobjekt (3) enthält,
b) bestimmen (S2) eines ersten Teilbereiches (24) innerhalb des Benutzeransichtsbereiches (100), wobei der erste Teilbereich (24) das Zielobjekt (3) enthält,
wobei das Verfahren weiterhin die folgenden Schritte aufweist:
c) bestimmen (S3) eines zweiten Teilbereiches (22) innerhalb des Benutzeransichtsbereiches (100), wobei der zweite Teilbereich (22) nicht mit dem ersten Teilbereich (24) überlappt,
d) bestimmen von Pixeldateninformation entsprechend dem ersten Teilbereich (24),
e) bestimmen von Pixeldateninformation entsprechend dem zweiten Teilbereich (22),
f) reduzieren (S4) der Pixeldateninformation, die dem zweiten Teilbereich (22) entspricht,
g) kombinieren (S5) der bestimmten Pixeldateninformation, die dem ersten Teilbereich (24) entspricht, mit der reduzierten Pixeldateninformation, die dem zweiten Teilbereich (22) entspricht, zu teilweise reduzierter Pixeldateninformation für den Benutzeransichtsbereich (300), und
h) Wiedergabe (S6) des Benutzeransichtsbereiches (300) der Realitätsansicht auf dem Displaysystem gemäß der teilweise reduzierten Pixeldateninformation für den Benutzeransichtsbereich.

2. Verfahren nach Anspruch 1, bei dem das Displaysystem eine tragbare Displayvorrichtung ist, beispielsweise eine am Kopf zu tragende optische Einrichtung.

3. Verfahren nach einem der vorstehenden Ansprüche, bei dem das Verfahren die Schritte umfasst, dass an dem Displaysystem eine Spezifikation des Zielobjektes empfangen wird und das Displaysystem das Zielobjekt in dem Benutzeransichtsbereich mit Hilfe der empfangenen Spezifikation des Zielobjekts identifiziert.

4. Verfahren nach einem der vorstehenden Ansprüche, bei dem der Schritt des Reduzierens der Pixeldateninformation entsprechend dem zweiten Teilbereich wenigstens einen folgenden Schritte umfasst: entfernen von digitalen Objekten und/oder digitalen Details von digitalen Objekten aus der Pixeldateninformation entsprechend dem zweiten Teilbereich, signifikantes Reduzieren eines Kontrasts in dem zweiten Teilbereich, verwischen des zweiten Teilbereichs, signifikantes Reduzieren einer Anzahl von Farben in dem zweiten Teilbereich, reduzieren der Farben in dem zweiten Teilbereich auf Graustufen, und zumindest teilweises Blockieren des zweiten Teilbereichs.

5. Verfahren nach einem der vorstehenden Ansprüche, bei dem das Verfahren den Schritt der Anreicherung des Benutzeransichtsgbereichs (400) mit zusätzlichen virtuellen Objekten einschließt.

6. Verfahren nach Anspruch 5, bei dem die zusätzlichen virtuellen Objekte Information über das Zielobjekt bereitstellen.

7. Verfahren nach Anspruch 5 oder 6, bei dem die zusätzlichen virtuellen Objekte wenigstens zum Teil in dem ersten Teilbereich lokalisiert sind.

8. Verfahren nach einem der vorstehenden Ansprüche, bei dem das Zielobjekt ein Drucker (3) in einer Druckerflotte oder ein Funktionsmodul eines Druckers ist.

9. Verfahren nach einem der vorstehenden Ansprüche, bei dem der zweite Teilbereich den ersten Teilbereich umgibt.

10. Verfahren nach einem der vorstehenden Ansprüche, bei dem der erste Teilbereich und der zweite Teilbereich zusammen gleich dem Benutzeransichtsbereich sind.

11. Displaysystem mit einer Kamera zum Empfang einer Realitätsansicht, einem Display zur Wiedergabe der empfangenen Realitätsansicht für einen Benutzer in einem Benutzeransichtsbereich (100), und einer Steuereinrichtung zum teilweisen Reduzieren von Pixeldateninformation aus dem Benutzeransichtsbereich (300), wobei die Steuereinrichtung dazu konfiguriert ist, die Schritte des Verfahrens nach einem der Ansprüche 1 bis 10 auszuführen.

12. Softwareprodukt mit Programmcode auf einem nichtflüchtigen computerlesbaren Medium, wobei dieser Programmcode, wenn er in einen Computer geladen ist, den Computer veranlasst, die Schritte des Verfahrens nach einem der Ansprüche 1 bis 10 auszuführen.

## Revendications

1. Procédé mis en œuvre sur ordinateur pour afficher une vue en réalité sur un système d'affichage, le procédé comprenant les étapes consistant à
a) établir (S1) une région de vue d'utilisateur (100) pour la vue en réalité comprenant un objet cible (3),
b) déterminer (S2) une première sous-région (24) dans la région de vue d'utilisateur (100), la première sous-région (24) comprenant l'objet cible (3),
dans lequel le procédé comprenant en outre les étapes consistant à
c) déterminer (S3) une seconde sous-région (22) dans la région de vue d'utilisateur (100), la seconde sous-région (22) étant non chevauchante avec la première sous-région (24),
d) déterminer des informations de données de pixel correspondant à la première sous-région (24),
e) déterminer des informations de données de pixel correspondant à la seconde sous-région (22),
f) réduire (S4) les informations de données de pixel correspondant à la seconde sous-région (22),
g) combiner (S5) les informations de données de pixel déterminées correspondant à la première sous-région (24) avec les informations de données de pixel réduites correspondant à la seconde sous-région (22) en des informations de données de pixel partiellement réduites pour la région de vue d'utilisateur (300), et
h) afficher (S6) la région de vue d'utilisateur (300) de la vue en réalité sur le système d'affichage selon les informations de données de pixel partiellement réduites pour la région de vue d'utilisateur.

2. Procédé selon la revendication 1, dans lequel le système d'affichage est un dispositif d'affichage portable, par exemple un dispositif optique monté sur la tête.

3. Procédé selon l'une quelconque des revendications précédentes, dans lequel le procédé comprend les étapes consistant à recevoir une spécification de l'objet cible au niveau du système d'affichage, et le système d'affichage identifiant l'objet cible dans la région de vue d'utilisateur au moyen de la spécification reçue de l'objet cible.

4. Procédé selon l'une quelconque des revendications précédentes, dans lequel l'étape consistant à réduire les informations de données de pixel correspondant à la seconde sous-région comprend au moins une des étapes consistant à retirer des objets numériques et/ou des détails numériques d'objets numériques des informations de données de pixel correspondant à la seconde sous-région, à réduire de manière significative un contraste dans la seconde sous-région, à rendre la seconde sous-région floue, à réduire de manière significative un nombre de couleurs dans la seconde sous-région, à réduire les couleurs dans la seconde sous-région à des couleurs à l'échelle de gris, et à bloquer au moins partiellement la seconde sous-région.

5. Procédé selon l'une quelconque des revendications précédentes, dans lequel le procédé comprend l'étape consistant à augmenter la région de vue d'utilisateur (400) avec des objets virtuels supplémentaires.

6. Procédé selon la revendication 5, dans lequel les objets virtuels supplémentaires fournissent des informations concernant l'objet cible.

7. Procédé selon la revendication 5 ou 6, dans lequel les objets virtuels supplémentaires sont au moins partiellement situés dans la première sous-région.

8. Procédé selon l'une quelconque des revendications précédentes, dans lequel l'objet cible est une imprimante (3) dans un parc d'imprimantes ou un module fonctionnel d'une imprimante.

9. Procédé selon l'une quelconque des revendications précédentes, dans lequel la seconde sous-région entoure la première sous-région.

10. Procédé selon l'une quelconque des revendications précédentes, dans lequel la première sous-région et la seconde sous-région ensemble sont égales à la région de vue d'utilisateur.

11. Système d'affichage comprenant une caméra pour recevoir une vue en réalité, un écran pour afficher la vue en réalité reçue à un utilisateur dans une région de vue d'utilisateur (100) et un dispositif de commande pour réduire partiellement des informations de données de pixel de la région de vue d'utilisateur (300), dans lequel le dispositif de commande est configuré pour exécuter les étapes du procédé selon l'une quelconque des revendications 1 à 10.

12. Produit de logiciel comprenant un code de programme sur un support non transitoire lisible par ordinateur, dans lequel ledit code de programme, lorsqu'il est chargé dans un ordinateur, amène l'ordinateur à exécuter les étapes du procédé selon l'une quelconque des revendications 1 à 10.
